# EUROPÄISCHE PATENTSCHRIFT

(11) **EP 1 708 434 B1**
(45) Veröffentlichungstag und Bekanntmachung des Hinweises auf die Patenterteilung: **26.11.2008**
(21) Anmeldenummer: 06006444.1
(22) Anmeldetag: 28.03.2006
(51) Int. Cl.: H04L 12/56

(54) **Verfahren und System zur Durchsetzung geeigneter Richtlinien für Datenverkehr in einem Funkkommunikationssystem**
Method and system for enforcing targeted guidelines for data traffic in a wireless communication system
Procédé et système pour imposer des directives ciblées au trafic de données dans un réseau de communication sans fil

(30) Priorität: 30.03.2005 DE 102005014480
(43) Veröffentlichungstag der Anmeldung: 04.10.2006
(73) Patentinhaber: Vodafone Holding GmbH, 40213 Düsseldorf (DE)
(72) Erfinder: Purkop, Thomas, 50259 Pulheim (DE)
(74) Vertreter: Müller, Thomas

(56) Entgegenhaltungen:
- WO-A-20/04100466
- 3RD GENERATION PARTNERSHIP PROJECT 3GPP: "3rd Generation Partnership Project; Technical Specification Group Services and System Aspects; Evolution of Policy Control and Charging (Release 7)" 3GPP TR 23.803 V0.3.0, 24. März 2005 (2005-03-24), Seite 1-13, XP002389323
- "Digital cellular telecommunications system (Phase 2+); Universal Mobile Telecommunications System (UMTS); Policy control over Go interface (3GPP TS 29.207 version 6.2.0 Release 6); ETSI TS 129 207" ETSI STANDARDS, EUROPEAN TELECOMMUNICATIONS STANDARDS INSTITUTE, SOPHIA-ANTIPO, FR, Bd. 3-CN3, Nr. V620, Dezember 2004 (2004-12), XP014027909 ISSN: 0000-0001
- "Digital cellular telecommunications system (Phase 2+); Universal Mobile Telecommunications System (UMTS); End to end Quality of Service (QoS) signalling flows (3GPP TS 29.208 version 5.9.0 Release 5); ETSI TS 129 208" ETSI STANDARDS, EUROPEAN TELECOMMUNICATIONS STANDARDS INSTITUTE, SOPHIA-ANTIPO, FR, Bd. 3-CN3, Nr. V590, Dezember 2004 (2004-12), XP014027911 ISSN: 0000-0001

## Beschreibung

Die vorliegende Erfindung betrifft ein Verfahren und System zur Durchsetzung geeigneter Richtlinien für Datenverkehr in einem Funk-Kommunikationssystem.

Bei modernen Funk-Kommunikationssystemen kann ein mobiles Endgerät über ein Zugangsnetzwerk mit einem Kernnetzwerk verbunden werden. Hierbei kann das Zugangsnetz ein GPRS (General Packet Radio Service) oder ein UMTS-Netz sein. In dem Kernnetzwerk kann ein Dienstenetzwerk (z.B. ein IP-Mulitmedia-Subsystem (IMS)) integriert sein.

Auf den Datenverkehr in einem solchen Funk-Kommunikationsnetz sind unterschiedliche Richtlinien (policies) anzuwenden. Diese können beispielsweise die Vergebührung des Datenverkehrs oder die Dienstgüte (Qualitiy of Service (QoS)) betreffen. Diese Richtlinien sind in entsprechenden Funktionen des Kommunikationsnetzes hinterlegt. Diese Richtlinien können beispielsweise in einer Charging Rule Function (CRF) und/oder einer Policy Decision Function (PDF) oder in einer Kombination solcher Funktionen hinterlegt sein. Sowohl eine in dem IMS hinterlegte Anwendungs-Funktion, die beispielsweise eine Dienstesteuerfunktion, wie eine Call Session control function (CSCF) darstellen kann, als auch der für die Verbindung von dem Kernnetzwerk zu dessen IMS zuständige Netzübergangknoten (Gateway GPRS support node (GGSN)) müssen zur Ausführung der ihnen zugeteilten Aufgaben, auf die Richtlinienfunktionen zugreifen.

In 3RD GENERATION PARTNERSHIP PROJECT 3GPP "3^{rd} Generation Partnership Projevt; Technical Specification Group Services and System Aspects; Evolution of Policy Control Chraging (Release 7)" (3GPP TR 23.803 V0.3.0, 24 März 2005) wird unter anderem eine Architektur für flow-basierte und dienstebasierte lokale Richtlinien in Kapitel 4.2.0 auf Seite 7 beschrieben. Wie sich aus dieser Beschreibung ergibt, wird bei Verwendung eines Autorisierungs-Tokens und eines Flow-Identifiers der Zugriff auf eine Richtlinieneinheit CRF von sowohl der TPF (als Teil des GGSN) als auch von einer Anwendungsfunktion (AF) gewährleistet. Der Zugriff auf die CRF erfolgt seitens des TPF aufgrund des verbundenen Netzwerkes, beispielsweise des Access Point Name (APN). Seitens der AF wird die CRF auf der Basis der IP-Adresse des Endnutzers kontaktiert.

Zur Bindung des IP-Träger an Dienste wird die Verwendung der IP-Adresse des Endgerätes sowie eines Filters, insbesondere eines TFT-Filters, vorgeschlagen, um die Richtlinien- und Vergebührungsregeln für einen speziellen sekundären PDP Kontext auszuwählen.

In der WO2004/100466 A wird weiterhin ein Verfahren, System und Netzwerkelement zur Autorisierung einer Datenübermittlung beschrieben. Wenn eine Kommunikationsverbindung initialisiert wird, wird eine Autorisierung für die Verbindungsparameter der Dienste von einer Richtlinien-Kontroll-Einheit angefragt, die über die zu autorisierenden Verbindungsparameter und über den Dienste-Typ, der für die Kommunikationsverbindung bereitgestellt werden kann, entscheidet.

Da der Zugriff der AF und dem GGSN unabhängig voneinander und in der Regel zeitversetzt erfolgt, kann der Fall eintreten, bei dem eine der Komponenten auf eine Richtlinienfunktion und die andere auf eine andere Richtlinienfunktion zugreift. Dies würde bedeuten, dass gegebenenfalls unterschiedliche beziehungsweise nicht aufeinander abgestimmte Richtlinien für den gleichen Datenverkehr durchgesetzt werden. Diesem Problem tragen die Dokumente des Standes der Technik nicht Rechnung.

Die Aufgabe der vorliegenden Erfindung ist es somit diesem Problem Rechnung zu tragen. Insbesondere soll eine zuverlässige Zuordnung der geeigneten Richtlinien Funktionen zu Komponenten eines Kommunikationssystems gewährleitstet werden.

Der Erfindung liegt die Erkenntnis zugrunde, dass diese Aufgabe gelöst werden kann, indem die Richtlinienfunktionen Informationen über die von Ihnen bedienten Endgeräte speichern und diese Informationen an weitere Komponenten des Kommunikationssystems übermitteln.

Die Aufgabe wird gelöst durch ein Verfahren mit den Merkmalen nach Anspruch 1 und ein System mit den Merkmalen nach Anspruch 15.

Vorteile und Merkmale, die in Bezug auf das Verfahren beschrieben werden gelten - soweit anwendbar - entsprechend für das erfindungsgemäße System und umgekehrt.

Gemäß einem ersten Aspekt wird die Aufgabe daher durch ein Verfahren zur Durchsetzung geeigneter Richtlinien für Datenverkehr in einem Funk-Kommunikationssystem gelöst, das zumindest ein mobiles Endgerät (UE) und zumindest ein Dienstenetz (IMS) mit zumindest einem Transport-Netzübergang-Netzknoten (GGSN) und zumindest einer Richtlinieneinheit (CRF/PDF) und zumindest ein Anwendungselement (AF), umfasst. Das Verfahren zeichnet sich dadurch aus, dass in der Richtlinieneinheit (CRF/PDF) zumindest ein Teil (IP-Adresse, MSISDN) von Nutzerdaten, von den von der Richtlinieneinheit (CRF/PDF) bedienten Nutzern zur Verwendung bei einer Zuständigkeitsprüfung der Richtlinieneinheit (CRF/PDF) gespeichert wird.

Durch das Speichern von Nutzerdaten wird in der Richtlinieneinheit festgelegt, welche Nutzer derzeit von der entsprechenden Richtlinieneinheit bedient werden. Diese Information wird bei späteren Registrierungsanfragen verwendet werden, um die für die anfragende Einheit zuständige Richtlinieneinheit zu ermitteln.

Insbesondere kann in der Richtlinieneinheit (CRF/PDF) beim Empfang einer Verbindungsanfrage einer Einheit des Kommunikationssystems (GGSN, AF) ein Vergleich bezüglich der gespeicherten Nutzerdaten (IP-Adresse, MSISDN) durchgeführt werden, um zu verifizieren, ob der Nutzer, auf den sich die aktuelle Verbindungsanfrage bezieht, von der Richtlinieneinheit (CRF/PDF) bedient wird. Die Information ist nicht nur in der Richtlinienfunktion für die Zuordnung geeigneter Richtlinien von Bedeutung, sondern kann auch für weitere Komponenten des Kommunikationssystems für deren Funktion wichtig sein.

Um diese Information darüber, ob eine Richtlinieneinheit einen Nutzer bedient, weiterzuleiten, kann in Abhängigkeit des Ergebnisses des Vergleiches zumindest an die anfragende Einheit (GGSN, AF) eine geeignete Antwortnachricht gesandt werden.

Einem Eingangsnetzknoten, insbesondere dem Transport-Netzübergang-Netzknoten (GGSN) kann eine Auswahltabelle für eine Richtlinieneinheit (CRF/PDF), die im Folgenden auch als Richtlinieneinheit-Auswahltabelle oder als Auswahltabelle bezeichnet wird, zugeordnet sein, die mindestens einen Eintrag einer Richtlinieneinheit (CRF/PDF), insbesondere eine Richtlinieneinheit-Adresse, enthält. Auf diese Weise kann der Eingangsknoten bei dem Verbindungsaufbau mit einem mobilen Endgerät beispielsweise in dem Fall, dass eine Richtlinieneinheit nicht zuständig oder nicht erreichbar ist, eine weitere Richtlinieneinheit für eine Kredit-Kontrolle beispielsweise durch Senden einer Kredit-Kontroll-Anfrage (Credit Control Request (CCR)) kontaktieren.

In mindestens einem Element (AF) des Dienstenetzwerkes (IMS) ist ebenfalls eine Richtlinieneinheit-Auswahltabelle hinterlegt. Diese wird mindestens zwei Einträge von Richtlinien aufweisen, die mit zwei Einträgen der Richtlinieneinheit-Auswahltabelle in dem Eingangsnetzknoten (GGSN) übereinstimmen.

Die in dem Element (AF) des Dienstenetzwerkes (IMS) hinterlegte Richtlinieneinheit-Auswahltabelle ist vorzugsweise mit der in dem Eingangsnetzknoten, insbesondere dem mindestens einen Transport-Netzübergang-Netzknoten (GGSN) gespeicherten Auswahltabelle identisch. Hierdurch kann bei reiner Abarbeitung der Tabelle sichergestellt werden, dass das Element (AF) und der Eingangsnetzknoten (GGSN) auf die gleiche Richtlinieneinheit zugreifen beziehungsweise mit dieser verbunden werden. Ein Rückfallmechanismus, wie dieser bei nicht identischen Tabelleneinträgen für den Fall vorgesehen sein müsste, dass der Eingangsnetzknoten (GGSN) eine Richtlinieneinheit ausgewählt hat, die nicht in der Tabelle des Elementes AF vorhanden ist, ist dabei nicht notwendig.

Die anfragende Einheit (GGSN, AF) wird vorzugsweise bei Empfang einer negativen Antwortnachricht ("too busy", "IP address not served") eine Anfrage an eine alternative Richtlinieneinheit (CRF/PDF), die entsprechend einer Nutzeridentität und der Richtlinieneinheit-Auswahltabelle ausgewählt wurde, absenden. Durch die Auswahl in Abhängigkeit der Nutzeridentität, die beispielsweise durch die IP-Adresse des UE festgelegt sein kann, wird die Anzahl der möglichen Richtlinienadressen minimiert und der Auswahlprozess und ein sich gegebenenfalls anschließender Schritt der Zuständigkeitsprüfung durch eine andere anfragende Einheit wird verkürzt.

Die Einträge der Richtlinieneinheit-Auswahltabelle können einer Gruppe von mobilen Endgeräten (UE) zugeordnet sein oder für das gesamte Netz gelten.

Es ist erfindungsgemäß auch möglich die Einträge der Richtlinieneinheit-Auswahltabelle einem mobilen Endgerät (UE) dynamisch zuzuordnen.

Für die dynamische Auswahl einer Richtlinieneinheit (CRF/PDF) kann eine Abfrage mit einem Fenster, das mindestens zwei Einträge der Liste beziehungsweise Auswahltabelle umfasst, durchgeführt werden. Durch die dynamische Auswahl kann eine Lastverteilung über die in der Tabelle hinterlegten Richtlinienfunktionen erfolgen.

Das Fenster kann insbesondere durch eine Modulodivision der Nutzerdaten und der Anzahl der Listeneinträge beziehungsweise Auswahltabelle festgelegt werden. Hierdurch wird stets ein Wert erhalten, auf den das Fenster gerichtet werden kann. Von dem durch die Modulodivision erhaltenen Wert, der auf eine Richtlinienfunktion verweist kann beispielsweise der nachfolgende oder mehrere nachfolgenden Einträge als das Fenster zusammengefasst werden, in dem diese einem Endgerät zugeordnet sind. In dem Eingangsnetzknoten und dem Element AF wird bei der dynamischen Zuordnung die gleiche Fenstergröße verwendet.

Die Modulodivision kann bei einer Auswahltabelle mit n Einträgen anhand einer der folgenden Gleichungen durchgeführt werden:
(UE-IP address) Mod n; oder
(UE MSISDN) Mod n

Der nach der Division der entsprechenden Werte verbleibende Rest stellt das Ergebnis dar. Das erste Element wird als primäre Richtlinien-Einheit ausgewählt, während das zweite Element als sekundäre Richtlinien-Einheit verwendet wird.

Vorzugsweise wird die IP-Adresse des mobilen Endgerätes (UE) als Nutzerdaten verwendet. Da diese Nutzerdaten sowohl dem Eingangsnetzknoten als auch dem Element AF zugänglich sein müssen bietet sich diese Angabe an. Alternativ kann die MSISDN-Nummer (Mobile Subscriber-Integrated Service Digital Network Nummer) verwendet werden. Hierbei kann aber die Übertragbarkeit (portability) der Nummer zu berücksichtigen, die gegebenenfalls zu Problem führen könnte.

In der Richtlinieneinheit können Vergebührungsrichtlinien und / oder Dienstgüte-Richtlinien für Datenverkehr und Anwendungen oder andere dienstbasierte lokale Richtlinien Service based Local Policy (SBLP)) hinterlegt sind.

Gemäß einem weiteren Aspekt betrifft die Erfindung ein System zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Eingangsnetzknoten, insbesondere einen Transport-Netzübergang-Netzknoten (GGSN) und zumindest einer Richtlinieneinheit (CRF/PDF) und zumindest ein Anwendungselement (AF), umfasst. Das System zeichnet sich dadurch aus, dass die Richtlinieneinheit (CRF/PDF) eine Speichereinheit aufweist, in der bei Herstellung einer Verbindung mit einem mobilen Endgerät (UE) zumindest ein Teil der Nutzerdaten des mobilen Endgerätes (UE) zur Verwendung bei einer Zuständigkeitsprüfung der Richtlinieneinheit (CRF/PDF) gespeichert wird.

Die Richtlinieneinheit (CRF/PDF) umfasst zudem vorzugsweise zumindest eine Vergleichseinheit, die einen Vergleich empfangener Nutzerdaten mit gespeicherten Nutzerdaten ausführen kann.

Zumindest in dem Transport-Netzübergang-Netzknoten (GGSN) ist eine Auswahltabelle zur Auswahl einer geeigneten Richtlinieneinheit (CRF/PDF) hinterlegt.

Das erfindungsgemäß Verfahren ist zur Durchführung des erfindungsgemäßen Verfahrens ausgelegt.

Die Erfindung wird im Folgenden erneut im Detail erläutert.

In einer 3GPP (3rd Generation Partnership Project) Umgebung, in der die CRF/PDF für Zwecke der Vergebührung in Abhängigkeit der übermittelten Datenmenge (Flow bearer charging) und in Abhängigkeit der dienstbasierten lokalen Richtlinie implementiert sind, müssen der Eingangsnetzknoten GGSN und die Anwendungsfunktion (Application Funktion (AF)) über die kombinierte Go/Gx-Schnittstelle (Diameter-basiert) und Gq/Rx-Schnittstelle (Diameter-basiert) die gleiche tatsächliche CRF/PDF auswählen und mit dieser eine Kommunikationsverbindung aufbauen, um sicher zu stellen, dass Richtlinien-Informationsdaten, die für einen Nutzer für eine gegenwärtige Anwendungs-Sitzung anzuwenden sind, aufgefunden und für den Eingangsnetzknoten GGSN durchgesetzt werden können.

Zwei mögliche Topologien existieren hierzu. Zum einen kann die CRF/PDF zusammen mit der AF angeordnet sein (collocated), wobei dies insbesondere bei einem P-CSCF (Proxy-Call-Session-Controll-Function) eines IMS der Fall ist. Zum anderen kann eine eigenständige CRF/PDF verwendet werden.

Im Fall einer gemeinsamen CRF/PDF und P-CSCF (bei IMS), sollte der CRF/PDF-Auswahl-Mechanismus sicherstellen, dass die ausgewählte CRF/PDF-Adresse tatsächlich der entspricht, die von dem UE gewählt wurde.

Angenommen dass eine P-CSCF1- und eine P-CSCF2-Adresse für das UE konfiguriert wurden, um geographische Redundanz (z.B. von dem Netzwerk zurückgesandt oder lokal konfiguriert) zu schaffen. In diesem Fall wird das UE die erste Adresse in der Liste auswählen und an diese anwendungsspezifische Nachrichten, wie insbesondere eine SIP-REGISTER-Nachricht, senden. Wenn die P-CSCF1 nicht kontaktiert werden kann oder eine Fehler-Antwort generiert hat, wählt das UE nun den zweiten Eintrag in der Liste aus. Das UE kann erfolgreich mit der P-CSCF2 verbunden werden.

Daraus kann gefolgert werden, dass bis zu der erfolgreichen Verbindung mit dem IMS unbekannt ist, welche P-CSCF das UE auswählen wird. Es ist möglich, dass die CRF/PDF, die mit der P-CSCF1 zusammen angeordnet ist, auf der Richtlinien-Anfrage des GGSN erfolgreich geantwortet hat, wodurch die GGSN zu einer falschen CRF/PDF geleitet wird. Die Richtlinien-Anfrage kann die Anfrage nach der Vergebührung, der SBLP (Service Based Local Policy) oder beidem sein.

Ähnlich verhält es sich im Fall einer eigenständigen CRF/PDF. Angenommen, dass CRF/PDF1 und CRF/PDF2 für die UE-ID (z.B. IP-Adresse) sowohl in der GGSN als auch der AF (z.B. P-CSCF des IMS) konfiguriert sind. In diesem Fall wählt die GGSN CRF/PDF1 aus und schafft erfolgreich eine Verbindung hierzu. Die AF empfängt eine anwendungsspezifische Anfrage von dem UE (z.B. SIP INVITE) und versucht mit der CRF/PDF1 eine valide Verbindung aufzubauen, kann diese aber nicht kontaktieren, beispielsweise aufgrund eines Verbindungsfehlers in dem Pfad zu der CRF/PDF1 oder weil die CRF/PDF1 überbelastet ist. AF wählt daraufhin den zweiten Eintrag auf der Liste (CRF/PDF2) aus und erstellt erfolgreich eine Verbindung hiermit. Das Ergebnis ist hierbei, dass die von der GGSN und von dem UE ausgewählten AF zu unterschiedlichen CRF/PDF führen und der Fehler nicht erkannt wird.

Der Vorteil der vorliegenden Erfindung liegt darin, dass die CRF/PDF-Auswahl und Auffindung die geeignete CRF/PDF-Auswahl sicherstellen kann und eine Fehlerbehandlung von sowohl der zusammengefassten/gemeinsam angeordneten und der eigenständigen Topologie ermöglicht wird.

Im Stand der Technik wird über eine kombinierte Go/Gx-Schnittstelle die GGSN als ein Diameter-Client verwendet, während der CRF/PDF als ein Diameter-Server agiert. Über die kombinierte Gp/Rx-Schnittstelle agiert die AF (z.B. P-CSCF des IMS) als Diameter-Client, während die CRF/PDF als Diameter-Server fungiert. In dem Standard IETS RFC 3588 sind für das Diameter-Verfahren für die Server-Erkennung und Ausfallsicherung offenbart.

Der Nachteil dieser bekannten Verfahren liegt darin, dass der bekannte Diameter-Mechanismus für die Server-Auswahl auf DNS NAPTR und SRV-Abfragen basieren, wobei der Bereich durch die Nutzer NAI (Network Access Identity) oder aus statischen (manuellen) Konfigurationen abgeleitet wird. Der DNS NAPTR und SVR-Ansatz sind dynamisch und können nicht gewährleisten, dass zwei unterschiedliche Clients tatsächlich für den selben Nutzer zu dem selben Server leiten, wenn beispielsweise ein Round Robin Algorithmus verwendet wird, um die Auslastung zu verteilen. Die manuelle lokale Konfiguration in dem Client ist nicht spezifiziert und kann daher nicht sicherstellen, dass GGSN und AF für den selben Nutzer zu der selben CRF/PDF führen. Bestehende Diameter-Mechanismen für die Ausfallsicherung zu einem zweiten Server sind in RFC 3588 definiert.

Die bestehenden Mechanismen adressieren das oben genannte Problem nicht hinreichend, so dass das Bedürfnis für eine Verbesserung besteht.

Bei der Erfindung ist zumindest die GGSN mit einer CRF/PDF-Auswahltabelle ausgestattet. Im Falle der eigenständigen Ausgestaltung der CRF/PDF ist ebenfalls die AF mit dieser Auswahltabelle ausgestattet. Es werden zumindest zwei CRF/PDF-Adressen konfiguriert, die einem UE-ID-Bereich zugeordnet seien können oder auf das gesamte Netzwerk anwendbar seien können. Die verwendete ID soll hierbei sowohl dem GGSN als auch der AF zugänglich sein. Aus diesem Grund bietet sich die UE-IP-Adresse an. Alternativ ist auch die MSISDN als ID möglich. Dies kann allerdings bezüglich der Weiterverwendung der Mobil-Nummer eine Herausforderung darstellen. Eine CRF/PDF bedient alle UEs innerhalb des zugeordneten IP-Adess-Bereiches. Auf diese Weise kann die Auslastung verteilt werden, um eine erforderliche Skalierbarkeit erreichen zu können.

In dem Fall, in dem die CRF/PDF zusammen mit der P-CSCF (im Falle der IMS) angeordnet ist, kann die CRF/PDF-Auswahltabelle während des PDP-Verbindungsbasierten (PDP-Context based) P-CSCF-Erkennungs-Verfahrens verwendet werden, um sicher zu stellen, dass die GGSN die geeignete P-CSCF - Adresse an das UE übermittelt. Entsprechend muss der DHCP-Server (Dynamic Host Configuration Protocol), der für die Vergabe von IP-Adressen zuständig ist, so konfiguriert sein, dass dieser die gleiche P-CSCF-Adressen wiedergibt, wie die für den gleiche UE-IP-Adressbereich konfigurierten Adressen in dem GGSN oder einem verbesserten GGSN (eGGSN, der im Folgenden auch als IPC (Intelligent Packet Core) bezeichnet wird). Wenn die CRF/PDF, die zusammen mit dem P-CSCF angeordnet ist, kontaktiert werden kann, wird erwartet, dass auch der P-CSCF kontaktiert werden kann und funktionsgemäß arbeitet.

Im Falle einer eigenständigen CRF/PDF, sind die CRF/PDF und P-CSCF-Auswahltabellen unabhängig voneinander. Die gleichen zwei CRF/PDFs sollten für einen Bereich von UE-IP-Adressen in sowohl dem GGSN als auch dem P-CSCF oder AF konfiguriert werden, wodurch sicher gestellt wird, dass sowohl GGSN als auch P-CSCF oder AF für ein gegebenes UE zu dem gleichen CRF/PDF leiten.

Bei der ersten PDP-Kontext-Aktivierung wählt, wie oben beschrieben, die GGSN die CRF/PDF aus, zu der die Richtlinien-Anfrage gesandt werden soll. Die Richtlinienanfrage umfasst die IP-Adresse des UE. Nach Empfang der ersten Richtlinienanfrage speichert die CRF/PDF die UE-IP-Adresse und sendet eine erfolgreiche Antwort an den GGSN. Diese stellt von nun an die CRF/PDF, die dem Nutzer zugeteilt ist (serving CRF/PDF) dar. In dem Fall, in dem die ausgewählte CRF/PDF nicht kontaktiert werden kann oder in dem diese einen Fehler anzeigt, wird die zweite CRF/PDF ausgewählt und diese wird die dem Nutzer zugeordnete CRF/PDF.

Wenn eine AF eine anwendungsspezifische Anfrage von dem Nutzer empfängt, wird diese die CRF/PDF auf der Basis der UE-IP-Adresse auswählen. Die AF wird dann eine Anfrage zum Senden anwendungsspezifischer Daten (z.B. abgeleitet aus SIP/SDP) an die CRF/PDF senden. Diese Anfrage umfasst die UE-IP-Adresse. Sobald die Anfrage mit den anwendungsspezifischen Daten empfangen wurde, überprüft die CRF/PDF ob die angebotene UE-IP-Adresse bedient wird. Wenn diese UE-IP-Adresse bedient wird, bestätigt die CRF/PDF die Anfrage erfolgreich. Wenn diese UE-IP-Adresse nicht bedient wird, sendet die CRF/PDF eine Fehlermeldung "IP address not served", die die AF dazu veranlassen wird, die Anfrage zu einer anderen CRF/PDF zu senden, mit der ebenfalls die GGSN für den selben Nutzer verbunden ist. Sollte die CRF/PDF, die die UE tatsächlich bedient, nicht kontaktiert werden können, kann die AF entscheiden die Anwendungssitzung auf der Basis der Betreiber-Richtlinie zu akzeptieren oder zurückzuweisen (z.B. IMS-Sitzung).

Im Falle des IMS, wo die CRF/PDF zusammen mit der P-CSCF implementiert seien können, sendet, bei dem Versagen der Anmeldung, wenn ein Fehler es verhindert, dass das UE es erneut mit einer zweiten P-CSCF Adesse versucht (z.B. 500, 503 oder interner Fehler), die CRF/PDF eine Diameter-Meldung, um den GGSN darüber zu informieren, dass die UE-IP-Adresse nicht bedient wird und sendet eine Diameter-Nachricht, mit der die GGSN darüber informiert wird, dass die UE-IP-Adresse nicht bedient wird und Initiieren die Freigabe der Go/Gx Diameter-Sitzung. Eine solche Nachricht kann eine Diameter RSR (Re-Auth-Request)-Nachricht sein, die eine Go/Gx spezielle Anwendungsnachricht (z.B. Credit Control-Request) hervorrufen würde. Die CRF/PDF würde dann einen "IP address not served" Fehler-Antwort an das GGSN senden. Bei Erhalt einer "IP address not served"-Fehlerantwort, stellt die GGSN eine Verbindung mit der anderen CRF/PDF, die mit der zweiten P-CSCF zusammen angeordnet ist, her, mit der die UE eventuell erfolgreich bei dem IMS angemeldet wird.

Die Erfindung wird im Folgenden anhand der beiliegenden Figuren erneut beschrieben:

Es zeigen:
Figur 1: ein Szenario bei dem Verfahrensablauf nach einer Ausführungsform der vorliegenden Erfindung (CRF/PDF Auswahl);
Figur 2: ein weiteres Szenario bei dem Verfahrensablauf nach einer Ausführungsform der vorliegenden Erfindung (CRF/PDF Wiederauswahl bei gemeinsam angeordneter P-CSCF);
Figur 3: ein weiteres Szenario bei dem Verfahrensablauf nach einer Ausführungsform der vorliegenden Erfindung (CRF/PDF Wiederauswahl durch AF); und

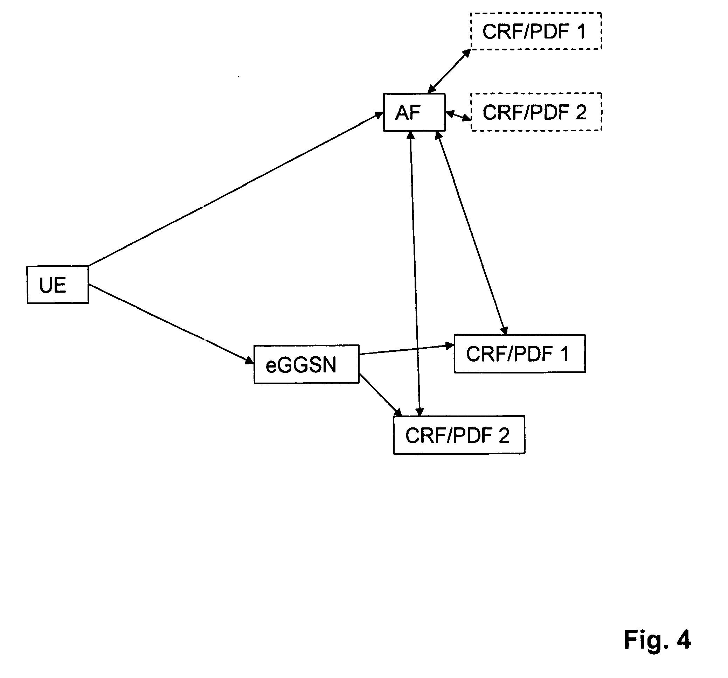

Figur 4: die schematische Anordnung einiger Netzwerkkomponenten.

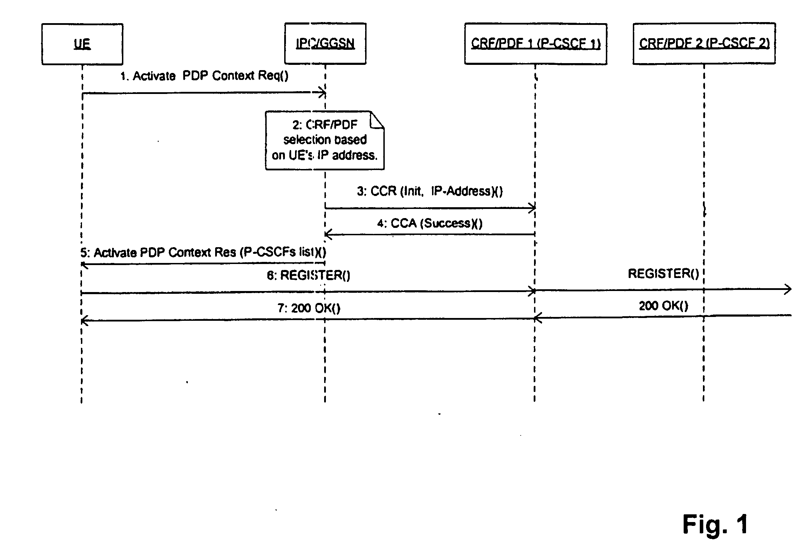

Bei dem in Figur 1 dargestellten Szenario werden die folgenden Schritte ausgeführt:
1. Die UE aktiviert einen PDP-Context um eine IMS-Registrierung auszuführen.
2. Daraufhin wählt der GGSN (in diesem Fall der eGGSN) die aufgrund der IP-Adresse, die zu dem UE gehört, auszuwählende CRF/PDF.
3. Der GGSN sendet eine CCR (Credit-Control-Request)-Anfangsmeldung an die ausgewählte CRF/PDF, wobei die UE-IP-Adresse angegeben wird.
4. Obwohl noch keine Anwendungssitzung besteht, autorisiert die CRF/PDF die PDP-Context-Aktivierung durch Senden einer CCA-Anfangsmeldung mit dem Ergebnis-Code AVP (Attribute value pair) gesetzt auf Erfolg (SUCCESS). Die CRF/PDF kann QoS-Grenzen für den PDP-Context setzen, z.B. die maximale Verkehr-Klasse für interaktiv oder Hintergrund, und kann vorbestimmte Vergebührungsregeln entsprechend der Betreiberrichtlinie senden.
5. Der IPC/GGSN aktiviert den PDP Context.
6/7. Wenn die Anwendung eine IMS-Anwendung ist und die CRF/PDF und P-CSCF zusammen angeordnet sind, wird das UE erfolgreich an dem IMS über P-CSCF1 angemeldet. Der GGSN sendet weitere Go/Gx-Anfragen an die ausgewählte CRF/PDF1.

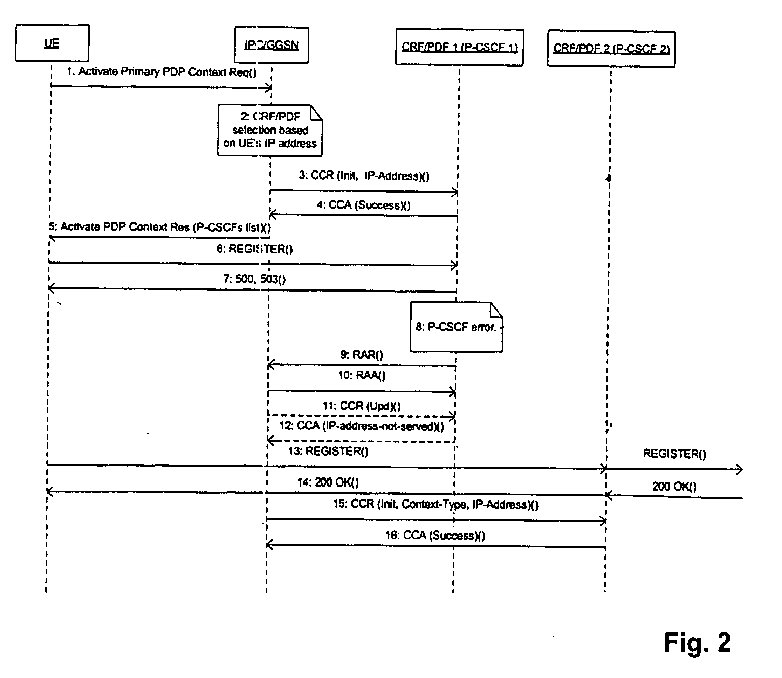

Bei dem in Figur 2 dargestellten Szenario werden die folgenden Schritte ausgeführt:
1. Das UE aktiviert einen PDP-Context um eine IMS-Registrierung auszuführen.
2. Daraufhin wählt der GGSN die aufgrund der IP-Adresse, die zu dem UE gehört, auszuwählende CRF/PDF. Hierbei wird CRF/PDF1 ausgewählt. (P-CSCF1)
3. Die GGSN sendet eine CCR-Request Anfangsmeldung an die ausgewählte CRF/PDF, wobei die UE-IP-Adresse angegeben wird.
4. Obwohl noch keine Anwendungssitzung besteht, autorisiert die CRF/PDF die PDP-Context-Aktivierung durch Senden einer CCA-Anfangsmeldung mit dem Ergebnis-Code AVP gesetzt auf Erfolg (SUCCESS). Die CRF/PDF kann QoS-Grenzen für den PDP-Context setzen, z.B. die maximale Verkehr-Klasse für interaktiv oder Hintergrund, und kann vorbestimmte Vergebührungsregeln entsprechend der Betreiberrichtlinie senden.
5. Die IPC/GGSN aktiviert den PDP-Context und sendet die P-CSCF Adressen Liste (P-CSCF1 und 2).
6. Das UE registriert sich bei der IMS durch Senden einer SIP REGISTER-Nachricht an P-CSCF 1 (die erste in der Liste aus zweien der zurückgewandten P-CSCF-Adressen).
7. Die P-CSCF 1 ist vorübergehend nicht erreichbar und sendet einen "500 Server Internal Error" oder "503 Service Unavailable".
8. Die P-CSCF 1 zeigt der gemeinsam angeordneten CRF/PDF Einheit den Fehler an, wobei alle Fehler angezeigt werden, die dazu führen, dass das UE die Registrierungsnachricht an eine andere P-CSCF Adresse sendet.
9-13. Die CRF/PDF initiiert eine Go/Gx Diameter-Sitzungs-Freigabe. Der Begründungs-Code für die Freigabe zeigt an, dass die IP-Adresse nicht bedient wird ("IP-address-not-served").
14-15. Das UE wählt eine zweite P-CSCF der Liste (P-CSCF 2) aus und registriert sich erfolgreich an dem IMS.
16. Nachdem die CRF/PDF 1 die Go/Gx-Sitzung unter Angabe von ("IP-address-not-served") freigegeben hat, wählt der GGSN die sekundäre CRF/PDF (CRF/PDF2) aus und sendet eine CCR-Anfangs-Nachricht, die die UE-IP-Adresse angibt.
17. Obwohl keine IMS-Sitzung existiert, autorisiert die E-PDF 2 die Aktivierung des primären PDP Contexts durch Senden einer CCA Anfangs-Nachricht mit Result-Code AVP auf SUCCESS gesetzt. Die CRF/PDF kann QoS Grenzen für den PDP Context setzen (beispielsweise maximale Verkehrs-Klasse für interaktiv oder Hintergrund) und sendet vorkonfigurierte Vergebührungsregeln entsprechend der Betreiberrichtlinie. Der GGSN wird weitere Go/Gx-Anfragen an die ausgewählte CRF/PDF 2 senden.

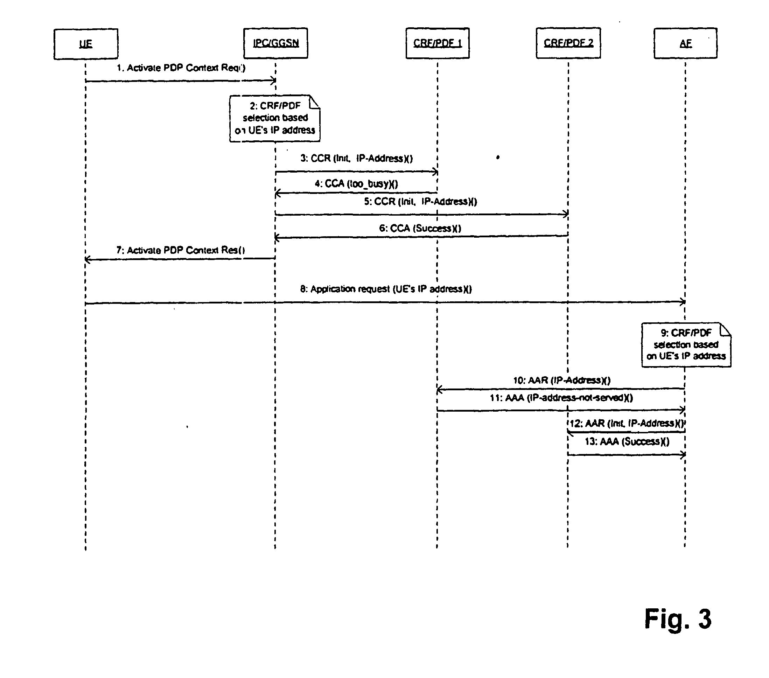

Bei dem in Figur 3 dargestellten Szenario werden die folgenden Schritte ausgeführt:
1. Das UE aktiviert einen PDP-Context.
2. Der GGSN wählt die aufgrund der IP-Adresse, die dem UE zugeordnet ist, auszuwählende CRF/PDF. Hierbei wird CRF/PDF1 ausgewählt.
3. Die GGSN sendet eine CCR-Request Anfangsmeldung an die ausgewählte CRF/PDF, wobei die UE-IP-Adresse angegeben wird.
4. Die CRF/PDF ist vorübergehend nicht erreichbar und antwortet mit einer Fehlermeldung.
5. GGSN sendet eine CCR Anfangsmeldung an die sekundäre CRF/PDF.
6. Obwohl noch keine Anwendungssitzung besteht, autorisiert die CRF/PDF die PDP-Context-Aktivierung durch Senden einer CCA-Anfangsmeldung mit dem Ergebnis-Code AVP gesetzt auf Erfolg (SUCCESS). Die CRF/PDF kann QoS-Grenzen für den PDP-Context setzen, z.B. die maximale Verkehr-Klasse für interaktiv oder Hintergrund, und kann vorbestimmte Vergebührungsregeln entsprechend der Betreiberrichtlinie senden.
7. GGSN aktiviert den PDP Context.
8. Das UE sendet eine anwendungsspezifische Anfrage (z.B. SIP INVITE) an die AF.
9. Die AF wählt die zu kontaktierende CRF/PDF in Abhängigkeit der UE IP-Adresse aus. Es wird CRF/PDF 1 gewählt.
10. AF sendet eine Gq/Rx-Nachricht (z.B. AAA) an die ausgewählte CRF/PDF mit anwendungsspezifischen Daten und schließt die UE-IP-Adresse ein.
11. Die CRF/PDF antwortet mit "IP-address-not-served".
12. AF sendet die Gq/Rx Nachricht an die sekundäre CRF/PDF.
13. Die UE-IP-Adresse wird von der CRF/PDF bedient. Die CRF/PDF antwortet der AF erfolgreich. Sowohl GGSN als auch AF führen zu derselben CRF/PDF und die Anwendungs-Sitzung kann fortgeführt werden.

Die Erfindung kann insbesondere in Anwendungen für GGSN/AF-Implentierungen eingesetzt werden, um die Auswahl/Wiederauswahl einer geeigneten CRF/PDF (Charging Rule Function/Policy decision Function) zu gewährleisten und eine geeignete Fehlerbehandlung bereit zu stellen.

## Patentansprüche

1. Verfahren zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Eingangsknoten und zumindest einer Richtlinieneinheit (CRF/PDF) und zumindest ein Anwendungselement (AF), umfasst, **dadurch gekennzeichnet, dass** in der Richtlinieneinheit (CRF/PDF) zumindest ein Teil (IP-Adresse, MSISDN) von Nutzerdaten, von den von der Richtlinieneinheit (CRF/PDF) bedienten Nutzern zur Verwendung bei einer Zuständigkeitsprüfung der Richtlinieneinheit (CRF/PDF) gespeichert wird.

2. Verfahren nach Anspruch 1, **dadurch gekennzeichnet, dass** in der Richtlinieneinheit (CRF/PDF) beim Empfang einer Verbindungsanfrage einer Einheit des Kommunikationssystems (GGSN, AF) ein Vergleich bezüglich der gespeicherten Nutzerdaten (IP-Adresse, MSISDN) durchgeführt wird, um zu verifizieren, ob der Nutzer, auf den sich die aktuelle Verbindungsanfrage bezieht, von der Richtlinieneinheit (CRF/PDF) bedient wird.

3. Verfahren nach Anspruch 2, **dadurch gekennzeichnet, dass** in Abhängigkeit des Ergebnisses des Vergleiches zumindest an die anfragende Einheit (GGSN, AF) eine geeignete Antwortnachricht gesandt wird.

4. Verfahren nach einem der Ansprüche 1 bis 3, **dadurch gekennzeichnet, dass** dem Eingangsnetzknoten (GGSN) eine Auswahltabelle für eine Richtlinieneinheit (CRF/PDF) zugeordnet ist, die mindestens einen Eintrag einer Richtlinieneinheit (CRF/PDF) enthält.

5. Verfahren nach Anspruch 4, **dadurch gekennzeichnet, dass** der Eintrag der Auswahltabelle für eine Richtlinieneinheit eine Richtlinieneinheit-Adresse darstellt.

6. Verfahren nach einem der Ansprüche 1 bis 5, **dadurch gekennzeichnet, dass** in mindestens einem Element (AF) des Dienstenetzwerkes (IMS) eine Auswahltabelle für eine Richtlinieneinheit hinterlegt ist.

7. Verfahren nach Anspruch 6, **dadurch gekennzeichnet, dass** die in dem Element (AF) des Dienstenetzwerkes (IMS) hinterlegte Auswahltabelle für eine Richtlinieneinheit mit der in dem mindestens einen Eingangsnetzknoten (GGSN) gespeicherten Auswahltabelle für eine Richtlinieneinheit identisch ist.

8. Verfahren nach Anspruch 3 bis 7, **dadurch gekennzeichnet, dass** die anfragende Einheit (GGSN, AF) bei Empfang einer negativen Antwortnachricht ("too busy", "IP address not served") eine Anfrage an eine alternative Richtlinieneinheit (CRF/PDF), die entsprechend einer Nutzeridentität und der Auswahltabelle für eine Richtlinieneinheit ausgewählt wurde, absendet.

9. Verfahren nach einem der Ansprüche 4 bis 8, **dadurch gekennzeichnet, dass** die Einträge der Auswahltabelle für eine Richtlinieneinheit einer Gruppe von mobilen Endgeräten (UE) zugeordnet sind.

10. Verfahren nach einem der Ansprüche 4 bis 9, **dadurch gekennzeichnet, dass** die Einträge der Auswahltabelle für eine Richtlinieneinheit einem mobilen Endgerät (UE) dynamisch zugeordnet werden.

11. Verfahren nach einem der Ansprüche 1 bis 10, **dadurch gekennzeichnet, dass** die IP-Adresse oder die MSISDN-Nummer (Mobile Subscriber-Integrated Service Digital Network Nummer) des mobilen Endgerätes (UE) als Nutzerdaten dient.

12. Verfahren nach einem der Ansprüche 10 oder 11, **dadurch gekennzeichnet, dass** für die dynamische Auswahl einer Richtlinieneinheit (CRF/PDF) eine Abfrage mit einem Fenster, das mindestens zwei Einträge der Auswahltabelle für eine Richtlinieneinheit umfasst, durchgeführt wird.

13. Verfahren nach Anspruch 12, **dadurch gekennzeichnet, dass** das Fenster durch eine Modulodivision der Nutzerdaten und der Anzahl der Listeneinträge der Auswahltabelle für eine Richtlinieneinheit festgelegt wird.

14. Verfahren nach einem der Ansprüche 1 bis 13, **dadurch gekennzeichnet, dass** in der Richtlinieneinheit Vergebührungsrichtlinien und / oder Dienstgüte-Richtlinien für Datenverkehr und Anwendungen hinterlegt sind.

15. System zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Eingangsnetzknoten (GGSN) und zumindest einer Richtlinieneinheit (CRF/PDF) und zumindest ein Anwendungselement (AF), umfasst, **dadurch gekennzeichnet, dass** die Richtlinieneinheit eine Speichereinheit aufweist, in der bei Herstellung einer Verbindung mit einem mobilen Endgerät (UE) zumindest ein Teil der Nutzerdaten des mobilen Endgerätes (UE) zur Verwendung bei einer Zuständigkeitsprüfung der Richtlinieneinheit (CRF/PDF) gespeichert wird.

16. System nach Anspruch 15, **dadurch gekennzeichnet, dass** die Richtlinieneinheit (CRF/PDF) zumindest eine Vergleichseinheit umfasst, die einen Vergleich empfangener Nutzerdaten mit gespeicherten Nutzerdaten ausführen kann.

17. System nach einem der Ansprüche 15 oder 16, **dadurch gekennzeichnet, dass** zumindest in dem Eingangsnetzknoten (GGSN) eine Auswahltabelle für eine Richtlinieneinheit (CRF/PDF) hinterlegt ist.

18. System nach einem der Ansprüche 15 bis 17, **dadurch gekennzeichnet, dass** dieses zur Durchführung eines Verfahrens nach einem der Ansprüche 1 bis 14 ausgelegt ist.

## Claims

1. Method for enforcing targeted guidelines for data traffic in a wireless communication system which comprises at least one mobile terminal (UE) and at least one service network (IMS) having at least one input node and at least one guideline unit (CRF/PDF) and at least one application element (AF), **characterised in that** in the guideline unit (CRF/PDF) is stored at least some (IP address, MSISDN) of the user data of the users served by the guideline unit (CRF/PDF) for use in a competency check on the guideline unit (CRF/PDF).

2. Method according to claim 1, **characterised in that** in the guideline unit (CRF/PDF) on receipt of a connection enquiry from a unit of the communication system (GGSN, AF) a comparison is made regarding the user data stored (IP address, MSISDN) in order to verify whether the user to whom the current connection enquiry relates is served by the guideline unit (CRF/PDF).

3. Method according to claim 2, **characterised in that** depending on the results of the comparison a suitable reply message is sent at least to the enquiring unit (GGSN, AF).

4. Method according to one of claims 1 to 3, **characterised in that** associated with the input network node (GGSN) is a selection table for a guideline unit (CRF/PDF) which contains at least one entry from a guideline unit (CRF/PDF).

5. Method according to claim 4, **characterised in that** the entry in the selection table for a guideline unit is a guideline unit address.

6. Method according to one of claims 1 to 5, **characterised in that** a selection table for a guideline unit is stored in at least one element (AF) of the service network (IMS).

7. Method according to claim 6, **characterised in that** the selection table for a guideline unit stored in the element (AF) of the service network (IMS) is identical to the selection table for a guideline unit stored in the at least one input network node (GGSN).

8. Method according to claims 3 to 7, **characterised in that** the enquiring unit (GGSN, AF), on receiving a negative reply message ("too busy", "IP address not served"), sends an enquiry to an alternative guideline unit (CRF/PDF) which has been selected according to a user identity and the selection table for a guideline unit.

9. Method according to one of claims 4 to 8, **characterised in that** the entries in the selection table for a guideline unit are assigned to a set of mobile terminals (UE).

10. Method according to one of claims 4 to 9, **characterised in that** the entries in the selection table for a guideline unit are dynamically assigned to a mobile terminal (UE).

11. Method according to one of claims 1 to 10, **characterised in that** the IP address or the MSISDN number (Mobile Subscriber-Integrated Service Digital Network number) of the mobile terminal (UE) serves as user data.

12. Method according to one of claims 10 or 11, **characterised in that** for the dynamic selection of a guideline unit (CRF/PDF) an enquiry is made with a window that comprises at least two entries from the selection table for a guideline unit.

13. Method according to claim 12, **characterised in that** the window is fixed by a modulo division of the user data and the number of list entries in the selection table for a guideline unit.

14. Method according to one of claims 1 to 13, **characterised in that** billing guidelines and/or service quality guidelines for data traffic and applications are laid down in the guideline unit.

15. System for enforcing targeted guidelines for data traffic in a wireless communication system which comprises at least one mobile terminal (UE) and at least one service network (IMS) having at least one input network node (GGSN) and at least one guideline unit (CRF/PDF) and at least one application element (AF), **characterised in that** the guideline unit comprises a memory unit in which, on establishment of a connection with a mobile terminal, is stored at least some of the user data of the mobile terminal (UE) for use in a competency check on the guideline unit (CRF/PDF).

16. System according to claim 15, **characterised in that** the guideline unit (CRF/PDF) comprises at least one comparison unit which is able to run a comparison of user data received with user data stored.

17. System according to one of claims 15 or 16, **characterised in that** a selection table for a guideline unit (CRF/PDF) is stored at least in the input network node (GGSN).

18. System according to one of claims 15 to 17, **characterised in that** it is adapted to carry out a method according to one of claims 1 to 14 as claimed.

## Revendications

1. Procédé pour imposer des directives ciblées au trafic de données dans un réseau de communication sans fil comprenant au moins un terminal mobile (UE) et au moins un réseau de service (IMS) ayant au moins un noeud d'entrée et au moins une unité de directives (CRF/PDF) et au moins un élément d'application (AF), **caractérisé en ce que** dans l'unité de directives (CRF/PDF), au moins une partie (adresse IP, MSISDN) des données d'utilisateur, lesquelles sont utilisées par les utilisateurs se servant de l'unité de directives (CRF/PDF) lors d'une vérification de compétence de l'unité de directives (CRF/PDF), est enregistrée.

2. Procédé selon la revendication 1, **caractérisé en ce que** dans l'unité de directives (CRF/PDF), lors de la réception d'une demande de connexion d'une unité du système de communication (GGSN, AF), une comparaison des données d'utilisateur enregistrées (adresse IP, MSISDN) est réalisée, afin de vérifier si l'utilisateur auquel s'applique la demande de connexion actuelle est servi par l'unité de directives (CRF/PDF).

3. Procédé selon la revendication 2, **caractérisé en ce que**, en fonction du résultat de la comparaison, au moins une unité de demande (GGSN, AF) envoie une information de réponse ciblée.

4. Procédé selon l'une quelconque des revendications 1 à 3, **caractérisé en ce qu'**un tableau de sélection est attribué au noeud d'entrée (GGSN) pour une unité de directives (CRF/PDF), laquelle contient au moins une entrée d'une unité de directives (CRF/PDF).

5. Procédé selon la revendication 4, **caractérisé en ce que** l'entrée du tableau de sélection représente une adresse d'unité de directives pour une unité de directives.

6. Procédé selon l'une quelconque des revendications 1 à 5, **caractérisé en ce qu'**un tableau de sélection pour une unité de directives est mis en mémoire dans au moins un élément (AF) du réseau de service (IMS).

7. Procédé selon la revendication 6, **caractérisé en ce que** le tableau de sélection mis en mémoire dans l'élément (AF) du réseau de service (IMS) pour une unité de directives est identique au tableau de sélection enregistré dans le au moins un noeud d'entrée (GGSN) pour une unité de directives.

8. Procédé selon les revendications 3 à 7, **caractérisé en ce que** l'unité de demande (GGSN, AF) envoie, lors de la réception d'une information de réponse négative ('trop occupé', 'adresse IP non servie'), une demande à une unité de directives alternative (CRF/PDF), laquelle est choisie conformément à une identité d'utilisateur et au tableau de sélection pour une unité de directives.

9. Procédé selon l'une quelconque des revendications 4 à 8, **caractérisé en ce que** les entrées du tableau de sélection sont attribuées pour une unité de directives d'un groupe de terminaux mobiles (UE).

10. Procédé selon l'une quelconque des revendications 4 à 9, **caractérisé en ce que** les entrées du tableau de sélection pour une unité de directives d'un terminal mobile (UE) sont attribuées de manière dynamique.

11. Procédé selon l'une quelconque des revendications 1 à 10, **caractérisé en ce que** l'adresse IP ou le numéro MSISDN (numéro RNIS de station mobile) du terminal mobile (UE) sert de données d'utilisateur.

12. Procédé selon l'une quelconque des revendications 10 ou 11, **caractérisé en ce que**, pour la sélection dynamique d'une unité de directives (CRF/PDF), une interrogation comportant une fenêtre, laquelle comprend au moins deux entrées du tableau de sélection pour une unité de directives, est réalisée.

13. Procédé selon la revendication 12, **caractérisé en ce que** la fenêtre est déterminée par une division modulaire des données d'utilisateur et le nombre des entrées de liste du tableau de sélection pour une unité de directives.

14. Procédé selon l'une quelconque des revendications 1 à 13, **caractérisé en ce que** dans l'unité de directives, des directives de compatibilité et/ou des directives de qualité de service pour la circulation de données et les applications sont mises en mémoire.

15. Système pour imposer des directives ciblées au trafic de données dans un réseau de communication sans fil comprenant au moins un terminal mobile (UE) et au moins un réseau de service (IMS) ayant au moins un noeud d'entrée (GGSN) et au moins une unité de directives (CRF/PDF) et au moins un élément d'application (AF), **caractérisé en ce que** l'unité de directives présente une unité d'enregistrement, dans laquelle, lors de l'établissement d'une connexion avec un terminal mobile (UE), au moins une partie des données d'utilisateur du terminal mobile (UE) sont enregistrées pour être utilisées lors d'une vérification de compétence de l'unité de directives (CRF/PDF).

16. Système selon la revendication 15, **caractérisé en ce que** l'unité de directives (CRF/PDF) comprend au moins une unité de comparaison, laquelle peut réaliser une comparaison des données d'utilisateur reçues avec les données d'utilisateur enregistrées.

17. Système selon l'une quelconque des revendications 15 ou 16, **caractérisé en ce qu'**au moins un tableau de sélection pour une unité de directives (CRF/PDF) est mis en mémoire dans le noeud d'entrée (GGSN).

18. Système selon l'une quelconque des revendications 15 à 17, **caractérisé en ce que** celui-ci est mis en place pour réaliser un procédé selon l'une quelconque des revendications 1 à 14.
